# EUROPÄISCHE PATENTANMELDUNG

(11) **EP 1 003 134 A2**
(43) Veröffentlichungstag der Anmeldung: **24.05.2000**
(21) Anmeldenummer: 99122810.7
(22) Anmeldetag: 17.11.1999
(51) Int. Cl.: G07F 7/06, B62B 3/14

(54) **Stapelbarer Einkaufswagen**

(30) Priorität: 20.11.1998 DE 19853607
(71) Anmelder: WANZL METALLWARENFABRIK GMBH, D-89336 Leipheim (DE)
(72) Erfinder: Wanzl, Rudolf, 89340 Leipheim (DE)

(57) **Zusammenfassung**

Die Erfindung betrifft einen stapelbaren Einkaufswagen (1), mit einem Korb (4), von dem zumindest die Seitenwände (5, 6) als aus Kunststoffbestehende Formteile gefertigt sind.
Es wird vorgeschlagen, dass an einer der Seitenwände (5 oder 6) ein Raum (10) zur Aufnahme eines Pfandschlosses (13) angeformt ist.

## Beschreibung

Die Erfindung betrifft einen stapelbaren Einkaufswagen, mit einem Korb, von dem zumindest die Seitenwände als aus Kunststoff bestehende Formteile gebildet sind.

Es ist üblich, Einkaufswagen mit Pfandschlössern auszustatten, mit deren Hilfe gleiche Einkaufswagen in einer Reihe gestapelt lösbar aneinander koppelbar sind. Die Pfandschlösser sind dabei bevorzugt an den Schiebeeinrichtungen angeordnet.
Es wird seit längerem vorgeschlagen, an den Schiebeeinrichtungen Informationseinrichtungen elektronischer Art vorzusehen, die dem Benutzer des Einkaufswagens beim Einkaufsvorgang geeignete Informationen vermitteln sollen. Solche Informationseinrichtungen sind z.B. mit einem Bildschirm ausgestattet, der an der Schiebeeinrichtung zumindest so plaziert werden muß, dass links und rechts der Schiebeeinrichtung noch Platz für die Hände einer den Einkaufswagen schiebenden Person erhalten bleibt. Bei etwas schmäleren Einkaufswagen kann es dabei durchaus vorkommen, dass das an der Schiebeeinrichtung vorgesehene Pfandschloss hinderlich im Wege steht und ein angenehmes Schieben oder Ziehen des Einkaufswagens erschwert.

Es ist Aufgabe der Erfindung, bei einem Einkaufswagen der hier vorliegenden Art nach einem zum Anbringen eines Pfandschlosses bestimmten Platz oder Raum zu suchen, der außerhalb der Schiebeeinrichtung gelegen ist.

Es wird vorgeschlagen, den dafür vorgesehenen Raum an einer der Seitenwände des Korbes anzuformen.

Ein erster Vorteil der Erfindung besteht darin, dass der Raum für das Pfandschloss bereits beim Herstellvorgang der Seitenwände in einer Spritzgußform in einem einzigen Arbeitsgang geschaffen wird. Gleiches gilt auch, wenn z.B. der gesamte Korb in einer Spritzgußform hergestellt wird. Das Anbringen eines Raumes verursacht keine Mehrkosten.
Als zweiter Vorteil ist zu nennen, dass beim erwähnten Herstellvorgang auch sofort alle Befestigungsdetails wie Vorsprünge, Hinderschneidungen und dergleichen herstellbar sind, die beispielsweise ein schnappschlüssiges Befestigen eines Pfandschlosses ohne Verwendung weiterer Befestigungsmittel wie Schrauben, Muttern usw. ermöglichen.
Als weiterer Vorteil kann angeführt werden, dass der Einkaufswagen auch ohne ein im Raum befindliches Pfandschloss zum Einkaufen verwendbar ist.
Schließlich besteht ein nicht zu unterschätzender Vorteil darin, dass, im Zuge einer Ausgestaltung der Erfindung, der Raum zur Aufnahme eines Pfandschlosses relativ weit oben, also nahe des oberen Korbrandes vorgesehen werden kann. Beim An- oder Abkoppeln eines Einkaufswagens braucht sich daher der Benutzer des Wagens nicht weit nach unten bücken, um den Schlüssel zu erreichen oder das Pfand in das Pfandschloss einführen oder dem Pfandschloss entnehmen zu können.

Die US 4,589,538 beschreibt ein Pfandschloss, das an der Außenfläche einer Seitenwand des Korbes eines Einkaufswagens befestigt ist. Der Korb ist als Drahtgitterkonstruktion gestaltet, so dass zum Befestigen des Pfandschlosses, das im Ausführungsbeispiel relativ groß gestaltet ist, zumindest vier Befestigungsteile erforderlich sind. Da die Pfandschlösser solcher Wagen immer auf gleicher Höhe sein müssen, um ein An- und Abkoppeln zu erlauben, müssen auch weitere Teile vorhanden sein, die ein Befestigen der Pfandschlösser an den Einkaufswagen in immer gleicher Lage ermöglichen. Zum Befestigen eines Pfandschlosses an einem aus Drahtgittern bestehenden Korb eines Einkaufswagens ist somit ein nicht unerheblicher Bauteileaufwand erforderlich. Das Vorsehen eines Raumes, wie dies die jetzt vorliegende Erfindung vorschlägt, ist bei einem aus Drahtgittern gefertigten Korb nicht oder nur durch einen enormen Kostenaufwand möglich.

Die Erfindung wird anhand von Ausführungsbeispielen näher erläutert. Es zeigt
- Fig. 1: einen Einkaufswagen mit einem in einer Seitenwand eingesetzten Pfandschloss sowie
- Fig. 2: eine von mehreren Möglichkeiten, wie das Pfandschloss im Raum einsetzbar ist.

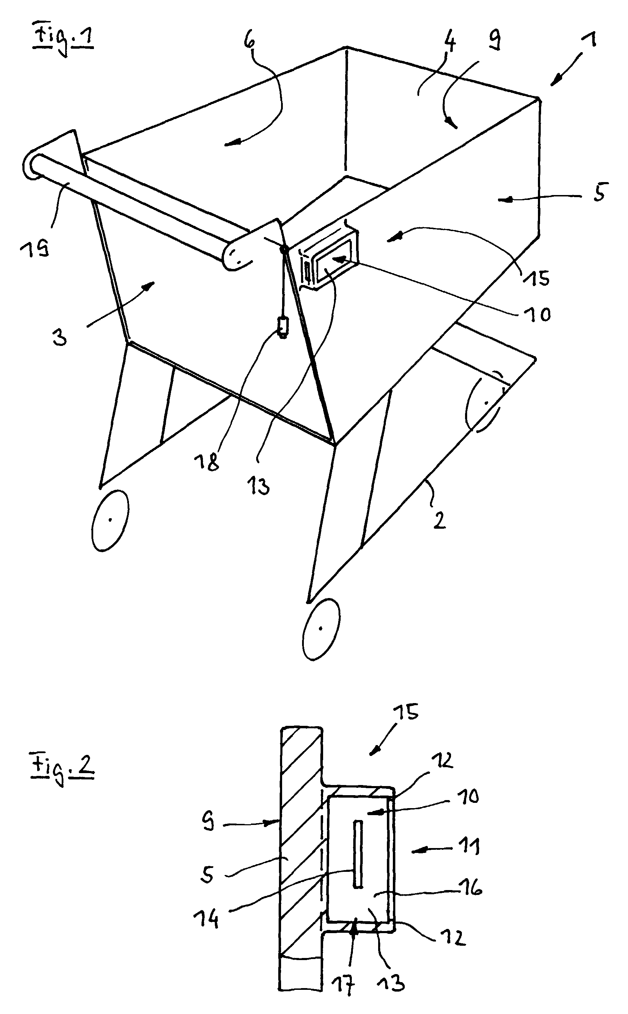

Der in Fig. 1 dargestellte Einkaufswagen 1 steht stellvertretend für alle auf verschiedene Weise gestaltbaren Einkaufswagen 1, die mit einem Korb 4 zur Aufnahme von Ware ausgestattet sind. Der mit einer Schiebeeinrichtung 19 ausgestattete Einkaufswagen 1 weist ein Fahrgestell 2 auf, das den bevorzugt konischen Korb 4 trägt, dessen rückwärtiges Ende durch eine schwenkbare Klappe 3 verschließbar ist. Solchermaßen gestaltete Einkaufswagen 1 lassen sich in bekannter Weise platzsparend ineinanderschieben, also stapeln. Zumindest die beiden Seitenwände 5, 6 des Korbes 4, gewöhnlich jedoch der komplette Korb 4, mit oder ohne Klappe 3, sind als aus Kunststoff bestehende Formteile gefertigt. Sie werden als Kunststoff-Spritzgußteile in bekannter Weise in einer geeigneten Spritzgußform hergestellt. An einer der beiden Seitenwände 5, 6, im Beispiel ist es die Seitenwand 5, ist ein Raum 10 vorgesehen, der zur Aufnahme eines als Baueinheit (z.B. als Kassette) gestalteten Pfandschlosses 13 vorgesehen ist. Das bevorzugt quaderförmige Pfandschloss 13 weist in bekannter Weise in seinem Innern eine mit einer Pfandaufnahmevorrichtung korrespondierende Verriegelungseinrichtung auf, in die ein als Schlüssel gestaltetes Kopplungsteil 18 eines weiteren Einkaufswagens 1 einführbar ist. Das Kopplungsteil 18 ist, bevorzugt vom Pfandschloss 13 losgelöst, auf geeignete Weise nahe dem Pfandschloss 13 bevorzugt an der Seitenwand 5 befestigt. Das auf Pfandbasis erfolgende An- und Abkoppeln mehrerer Einkaufswagen 1 mit Hilfe der Pfandschlösser 13 und der Kopplungsteile 18 ist bekannt und braucht an dieser Stelle nicht erneut beschrieben zu werden.

Fig. 2 zeigt ein Beispiel, wie der Raum 10 angeordnet und gestaltet sein kann und wie sich das Pfandschloss 13 im Raum befindet. Die Zeichnung zeigt im Detail und im Schnitt die Seitenwand 5 mit dem Raum 10, in dem das Pfandschloss 13 angeordnet ist. Der bevorzugt quaderförmige, als Vertiefling gestaltete Raum 10 ist zur Außenseite der Seitenwand 5 hin offen.

Am Rand des Raumes 10 befindliche Vorsprünge 12 hintergreifen das im Raum 10 befindliche Pfandschloss 13 und ermöglichen ein schnappschlüssiges Befestigen des Pfandschlosses 13 an der Seitenwand 5 ohne zusätzliche Befestigungsmittel. Das Pfandschloss 13 weist eine Aufnahmeöffnung 14 für ein Pfand, z.B. Münze, Scheckkarte und dergleichen auf. Eine weitere, in der Zeichnung nicht dargestellte Öffnung 15 läßt das Einführen eines Kopplungsteiles 18 eines weiteren Einkaufswagens 1 in das Pfandschloss 13 zu. Jene Flächen 16 des Pfandschlosses, welche die Aufnahmeöffnung 14 und die Öffnung 15 aufweisen, können durch je eine Wand des Raumes 10 abgedeckt sein, wobei in diesen Wänden passende Durchbrüche vorgesehen sind, um die Aufnahmeöffnung 14 und die Öffnung 15 nicht abzudecken. Die zum Einsetzen des Pfandschlosses 13 in den Raum 10 erforderliche Einführöffnung 11 kann, wie im Beispiel gezeigt, von der Seite aus zugänglich sein. Je nach Anordnung des Raumes 10 in der Seitenwand 5 kann die Einführöffnung 11 auch von der Innenseite 9 der Seitenwand 5, also vom Korbinneren aus zugänglich sein, vgl. Fig. 1. Sie kann auch von oben, von unten, in Längsrichtung des Einkaufswagens 1 betrachtet von hinten oder von vorne zugänglich sein, das heißt, der Raum 10 kann zum Zwecke des Einführens eines Pfandschlosses 13 nach oben oder nach unten, in Längsrichtung nach hinten oder vorne oder jeweils zu einer der beiden Seiten offen sein. In allen Fällen ist das Pfandschloss 13 hochkant, also mit einer Schmalseite 17 aufliegend, im Raum 10 untergebracht. Das Pfandschloss 13 ist zum formschlüssigen Einsetzen in den Raum 10 bestimmt, das heißt, der Raum 10 ist so gestaltet, dass er ein formschlüssiges Einsetzen des Pfandschlosses 13 in den Raum 10 zuläßt.

Bei Einkaufswagen 1, deren Körbe 4 aus Kunststoff bestehen, ist es allgemein üblich, die beiden Seitenwände 5, 6 oben so weit nach hinten zu verlängern, dass an jeder Seitenwand 5, 6 ein nach hinten sich erstreckender Vorsprung gebildet ist. Die Vorsprünge dienen in bekannter Weise zur Befestigung der Schiebeeinrichtung 19. Die Vorsprünge sind demnach Bestandteil der Seitenwände 5, 6. Insofern kann der Raum 10 zur Aufnahme eines Pfandschlosses 13 auch an besagtem Vorsprung einer Seitenwand 5 oder 6 vorgesehen sein.

## Patentansprüche

1. Stapelbarer Einkaufswagen (1), mit einem Korb (4), von dem zumindest die Seitenwände (5, 6) als aus Kunststoff bestehende Formteile gefertigt sind, dadurch **gekennzeichnet,** dass an einer der Seitenwände (5 oder 6) ein Raum (10) zur Aufnahme eines Pfandschlosses (13) angeformt ist.

2. Stapelbarer Einkaufswagen nach Anspruch 1, dadurch **gekennzeichnet,** dass der Raum (10) als Vertiefung gestaltet ist.

3. Stapelbarer Einkaufswagen nach Anspruch 1 oder 2, dadurch **gekennzeichnet,** dass der Raum (10) eine Einführöffnung (11) zum Einsetzen eines Pfandschlosses (13) aufweist wobei die Einführöffnung (11) entweder
- von außen oder vom Korbinneren aus oder
- von oben oder von unten her oder
- in Längsrichtung des Einkaufswagens (1) betrachtet von hinten oder von vorne zugänglich ist.

4. Stapelbarer Einkaufswagen nach einem der Ansprüche 1 bis 3, dadurch **gekennzeichnet,** dass am Rand des Raumes (10) zum Hintergreifen des im Raum (10) befindlichen Pfandschlosses (13) bestimmte Vorsprünge (12) vorgesehen sind.

5. Stapelbarer Einkaufswagen nach einem der Ansprüche 1 bis 4, dadurch **gekennzeichnet,** dass das Pfandschloss (13) hochkant, mit einer Schmalseite (17) aufliegend, im Raum (10) einsetzbar ist.

6. Stapelbarer Einkaufswagen nach einem der Ansprüche 1 bis 5, dadurch **gekennzeichnet,** dass das Pfandschloss (13) formschlüssig in den Raum (10) einsetzbar ist.
